# EUROPEAN PATENT SPECIFICATION

(11) **EP 1 835 829 B1**
(45) Date of publication and mention of the grant of the patent: **04.08.2010**
(21) Application number: 05702277.4
(22) Date of filing: 17.01.2005
(51) Int. Cl.: A47J 25/00, B26B 3/00

(54) **MANGO SLICER**
MANGOSCHNEIDVORRICHTUNG
DISPOSITIF SERVANT A DECOUPER DES MANGUES EN TRANCHE

(30) Priority: 11.01.2005 US 905568
(43) Date of publication of application: 26.09.2007
(60) Divisional application: 08015718.3
(73) Proprietor: Helen of Troy Limited, 13 8th Avenue Belleville P.O. Box 836E St. Michael (BB)
(72) Inventor: WALZAK, Kevin Leo, Syracuse, NY 13205 (US); LEE, Alexander, New York, NY 10001 (US); PERRY, Marco, Brooklyn, NY 11231 (US)
(74) Representative: Heyer, Volker
(86) International application number: PCT/IB2005/000115
(87) International publication number: WO 2006/075199

(56) References cited:
- DE-B- 1 101 708
- DE-C- 928 787
- US-A- 195 750
- US-A- 195 750
- US-A- 824 445
- US-A- 1 466 114
- US-A- 4 490 912
- US-A- 4 681 000

## Description

### CROSS REFERENCE TO RELATED APPLICATION

The present application claims the benefit of the filing date of co-pending U.S. Provisional Application No. 60/535,648, filed January 12, 2004.

### BACKGROUND OF THE INVENTION

The present application relates generally to kitchen utensils and, more particularly, to kitchen utensils for de-pitting or de-seeding and slicing fruits such as, for example, mangos.

Kitchen utensils adapted to cut or slice fruit or vegetables, while simultaneously coring such fruit or vegetables, are well-known. For example, US Patent No. 4,490,912 discloses a pineapple cutter having a circular central cutter for coring a pineapple and a plurality of outwardly extending cutters for simultaneously slicing the fruit. However, such cutters cannot be efficiently utilized on fruits or vegetables that have oblong or irregularly shaped pits or seeds, such as found in mangos and other fruits.

U.S. patent no. 195,750 discloses a hinged apple cutter, with a bed fixedly secured to an underlying support and carrying a cutting structure including an oval central portion and straight end portions extending from opposite ends of the oval along a long axis thereof. Hingedly coupled to the bed is a pivoting top having a handle and adapted to press downwardly on an apple supported on the cutting structure.

The object of the invention is to improve prior art devices and methods for cutting or slicing fruits or vegetables.

The object of the invention is achieved by the independent claims. Advantageous embodiments of the invention are described in the sub-claims.

### SUMMARY OF THE INVENTION

The present application discloses a slicer for slicing and de-pitting or deseeding a fruit or vegetable, such as, for example, a mango. The slicer includes a slicing structure having a central cutter that has a generally oblong shape and two outwardly extending longitudinal cutters coupled to the central cutter. The central cutter and the outwardly extending cutters each have a keen edge adapted to cut or slice the fruit or vegetable. A handle structure is coupled to the first and second cutters and may include first and second handles formed of an elastomeric material.

It will be appreciated that, due to the generally oblong shape of the central cutter, when the slicer disclosed in the present application is used to slice a fruit, such as a mango, the central cutter substantially strips the fruit's flesh from the internal seed, while the longitudinal cutters slice the fruit generally in half.

### BRIEF DESCRIPTION OF THE DRAWINGS

For the purpose of facilitating an understanding of the subject matter sought to be protected, there is illustrated in the accompanying drawings embodiments thereof, from an inspection of which, when considered in connection with the following description, the subject matter sought to be protected, its construction and operation, and many of its advantages, should be readily understood and appreciated.
FIG. 1 is a top plan view of an embodiment of a slicer.
FIG. 2 is a side elevation view of the slicer of FIG. 1.
FIG. 3 is a top plan view of another embodiment of a slicer.
FIG. 4 is a perspective view of the slicer of FIG. 3.
FIG. 5 is a side elevation view of the slicer of FIG. 3 taken along line 5-5.
FIG. 6 is a side elevation view of the slicer of FIG. 3 taken along line 6-6.
FIG. 7 is a top plan view of an embodiment of the slicer of the present application.
FIG. 8 is a perspective view of the slicer of FIG. 7.
FIG. 9 is a side elevation view of the slicer of FIG. 7 taken along line 9-9.
FIG. 10 is a side elevation view of the slicer of FIG. 7 taken along line 10-10.

### DETAILED DESCRIPTION OF THE INVENTION

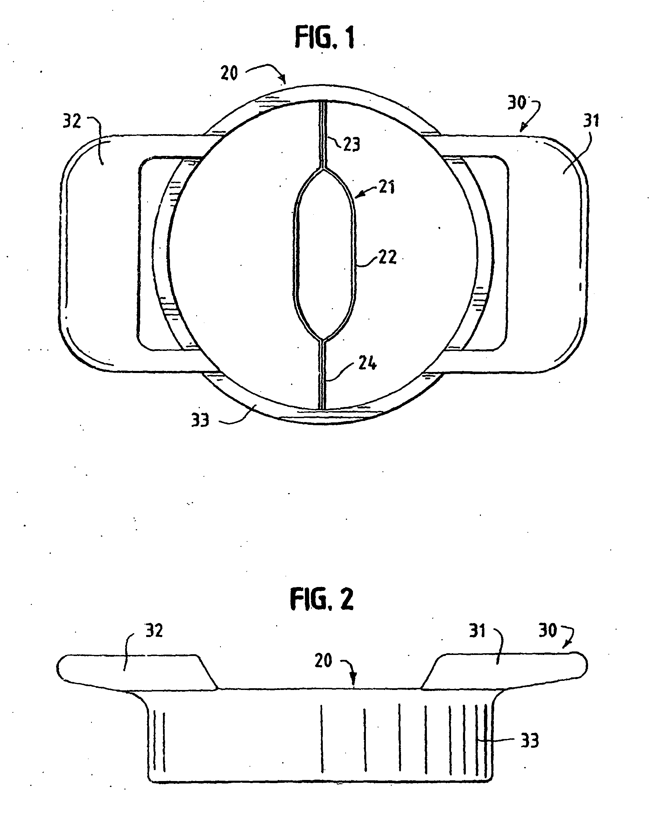

In an embodiment, the slicer of the present application is adapted to cut or slice and de-pit or de-seed fruits and vegetables having oblong pits or seeds, such as, for example, mango-like fruits. Referring to Figs. 1 and 2, an embodiment of a slicer, generally referred to as numeral 20, is shown. The slicer 20 includes a central slicing structure 21 having a generally oblongly shaped central cutter 22 and a first longitudinal cutter 23 and a second longitudinal cutter 24 extending outwardly from the central cutter 22. In an embodiment, the first and second cutters 23, 24 are transversely disposed relative to each other and the central cutter 22. The central cutter 22 and first and second cutters 23, 24 each have a cutting edge 25 disposed on a bottom side of the slicer 20 and which are adapted to cut or slice fruits and vegetables. The cutting edge 25 may include a keen edge adapted to slice or cut fruits and vegetables. In an embodiment, the cutting edge 25 is formed of stainless steel. In another embodiment, the central cutter 22 and the first and second cutters 23, 24 are formed of stainless steel.

In an embodiment, the oblong shape of the central cutter 22 is elliptical, thereby defining major and minor axis in relation to the ellipse. In an embodiment, the length-to-width ratio, or major-to-minor axis ratio, is between about 1.6 to about 3.8. m another embodiment, the length of the ellipse, along the major axis, is about 50 mm to about 75 mm, and the width of the ellipse, along the minor axis, is between about 20 mm to about 30 mm.

The sheer may also include a handle structure 30 coupled to respective distal ends of the first and second cutters 23, 24. The handle structure 30 includes first and second handles 31, 32, which may be formed of an elastomeric material. In an embodiment, the handle structure 30 includes a central body 33 that has a substantially circular shape wherein the first and second handles 31, 32 are disposed transversely relative to each other and substantially parallel to the major axis of the elliptical shape and are integrally coupled to the central body 33. In an embodiment, the central body 33 is formed of a plastic.

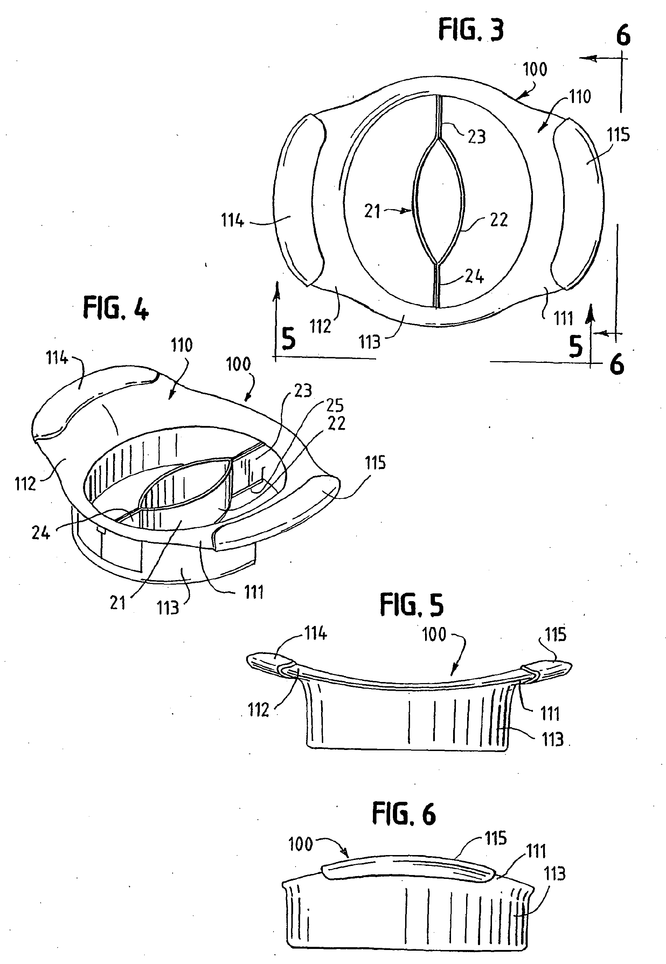

Referring now to Figs. 3-6, another embodiment of the slicer, generally depicted as numeral 100, is shown, with substantially like components as the previously described embodiments shown with like numerals. Handle structure 110 may include first and second handles 111, 112 integrally coupled to a central body 113. The first and second handles 111, 112 and the central body 113, may be formed of a plastic material. In an embodiment, the first and second handles 111, 112 may include respective handle portions 114, 115 formed of an elastomeric material. The central body 113 may be coupled to respective first and second distal ends of the first and second cutters 23, 24, so that the first and second handles 111, 112 are disposed substantially parallel to the major axis of the oblongly shaped central cutter 22.

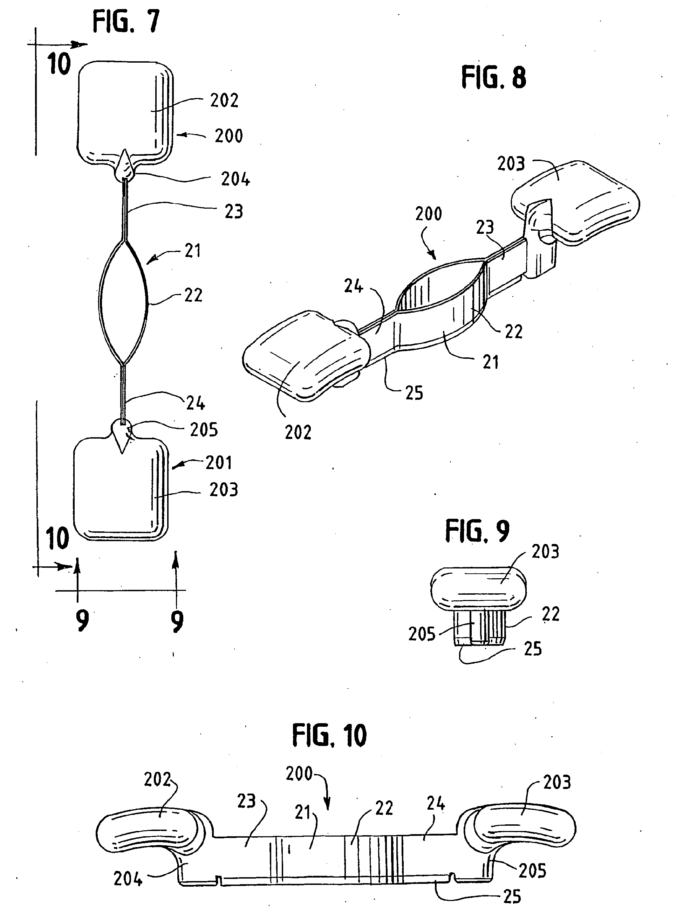

Referring to Figs. 7-10, an embodiment of the slicer of the present application, generally depicted as numeral 200, is shown, with substantially like components as the previously described embodiments shown with like numerals. Handle structure 201 may include first and second handles 202, 203, coupled to respective distal ends of the first and second cutters 23, 24 with respective upstanding first and second legs 204, 205. In an embodiment, the first and second handles 202, 203 are formed of an elastomeric material. In an embodiment, the first and second legs 204, 205 are formed of a plastic material. In another embodiment, the first and second legs 204, 205 are integrally formed with the first and second cutters 23, 24.

It will be appreciated that in all of the embodiments of the present application, when a fruit having a seed or pit, such as, for example, a mango-like fruit, is positioned substantially centrally relative to the central cutter 22 and adjacent to the keen edges 25, and a force directed towards the fruit is applied to the first and second handles, the keen edges 25 cut through the fruit wherein the central cutter 22 substantially strips or removes the flesh of the fruit from the internal seed or pit and the first and second cutters 23, 24 substantially simultaneously slice the fruit generally in half.

A method of removing a seed from a mango-like fruit is also provided. In an embodiment, the method includes providing a stainless steel slicing structure having a substantially elliptically shaped central cutter and first and second outwardly extending cutters disposed transversely relative to each other and extending outwardly from the central cutter, the central cutters and the first and second cutters each have a keen edge. The method further includes providing a handle structure having first and second handles and being coupled to the first and second slicers, and positioning the fruit generally centrally relative to the central cutter and adjacent to the keen edges, and thus causing a force to be applied to the handles towards the fruit, thereby causing the keen edges to penetrate the fruit to remove the fruit from the seed while simultaneously cutting the fruit generally in half.

The matter set forth in the foregoing description and accompanying drawings is offered by way of illustration only and not as a limitation. While particular embodiments have been shown and described, it will be apparent to those skilled in the art that changes and modifications may be made without departing from the broader aspects of applicants' contribution. The actual scope of the protection sought is intended to be defined in the following claims when viewed in their proper perspective based on the prior art.

## Claims

1. A device (200) for removing a seed of a mango-like fruit comprising:
a stainless steel slicing structure (21) having a substantially elliptically shaped central cutter (22) and first (23) and second cutters (24) extending outwardly from the central cutter (22) substantially along a major axis of the elliptical shape, the central cutter (22) and the first (23) and second cutters (24) each having a keen edge (25) for slicing the fruit; **characterized by**
first (202) and second handles (203) respectively directly connected to distal ends of the first (23) and second cutters (24);
wherein when the fruit is positioned substantially centrally relative to the central cutter (22) and adjacent to the keen edges (25) and a force directed towards the fruit is applied to the first (202) and second handles (203), the keen edges (25) cut through the fruit and the central cutter (22) substantially strips the fruit from the seed and the first (23) and second cutters (24) slice the fruit generally in half.

2. The device as claimed in claim 1 wherein the elliptical shape has a length-to-width ratio of between about 1.6 to about 3.8.

3. The device as claimed in claim 1 wherein the elliptical shape has a length of about 50 mm to about 75 mm, along a major axis thereof, and a width of about 20 mm to about 30 mm, along a minor axis thereof.

4. The device as claimed in claim 1 wherein the first (202) and second handles (203) are formed of an elastomeric material.

5. A method of removing a seed from a mango-like fruit comprising:
providing a stainless steel slicing structure (21) having a substantially elliptically shaped central cutter (22) and first (23) and second cutters (24) extending respectively in opposite directions outwardly from the central cutter (22), the central cutter (22) and the first (23) and second cutters (24) respectively having keen cutting edges (25) for slicing the fruit; **characterized by**
providing a handle structure (30; 201) having first (31; 202) and second handles (32; 203) extending outwardly from the slicing structure (21) respectively in opposite directions;
coupling the handle structure (30; 201) to the slicing structure (21) only at locations along a major axis of the elliptical shape;
positioning the slicing structure (21) immediately adjacent to the fruit; and
causing a force to be applied to the handles (31, 32; 202, 203) toward the fruit so that the force is transmitted to the slicing structure (21) only at points along the major axis, thereby causing the keen cutting edges (25) to penetrate the fruit to remove the fruit from the seed while simultaneously cutting the fruit generally in half.

6. The method of claim 5, wherein a first axis extends along the major axis of the elliptically shaped central cutter (22).

7. The method of claim 5, wherein the handles (31, 32) extend along a second axis disposed substantially perpendicular to the major axis.

8. The method of claim 7, wherein the coupling includes coupling the handles (31, 32) to the slicing structure (21) by a circular body (30).

9. The method of claim 6, wherein the handles (202, 203) extend along the first axis.

## Patentansprüche

1. Eine Vorrichtung (200) zum Entfernen eines Krens einer mangoähnlichen Frucht, umfassend:
eine Schneidstruktur (21) aus rostfreiem Stahl mit einer im Wesentlichen elliptisch geformten Hauptschneidvorrichtung (22) und einer ersten (23) sowie einer zweiten Schneidvorrichtung (24), die sich auswärts von der Hauptschneidvorrichtung (22) im Wesentlichen entlang einer Hauptachse der elliptischen Form erstrecken, während die Hauptschneidvorrichtung (22) sowie die erste (23) und die zweite Schneidvorrichtung (24) jeweils einen scharfen Rand (25) zum Schneiden der Frucht aufweisen, **gekennzeichnet durch**
einen ersten (202) und einen zweiten Griff (203), die entsprechend direkt mit den distalen Enden der ersten (23) und der zweiten Schneidvorrichtung (24) verbunden sind, während, wenn die Frucht im Wesentlichen mittig in Bezug auf die Hauptschneidvorrichtung (22) und benachbart zu den scharfen Rändern (25) angeordnet ist und eine Kraft in Richtung der Frucht über den ersten (202) und den zweiten Griff (203) angewendet wird,
die scharfen Ränder (25) **durch** die Frucht schneiden und die Hauptschneidvornchtung (22) im Wesentlichen die Frucht von dem Kern ablöst und die erste (23) und die zweite Schneidvorrichtung (24) die Frucht im Wesentlichen in Hälften schneiden.

2. Die Vorrichtung gemäß Anspruch 1, während die elliptische Form ein Längen-zu-Breiten-Verhältnis von zwischen ungefähr 1,6 bis ungefähr 3,8 aufweist.

3. Die Vorrichtung gemäß Anspruch 1, während die elliptische Form eine Länge von ungefähr 50 mm bis ungefähr 75 mm entlang einer Hauptachse davon aufweist sowie eine Breite von ungefähr 20 mm bis ungefähr 30 mm entlang einer Nebenachse davon.

4. Die Vorrichtung gemäß Anspruch 1, während der erste (202) und der zweite Griff (203) aus einem elastomeren Material gebildet sind.

5. Ein Verfahren zum Entfernen eines Kerns von einer mangoähnlichen Frucht, umfassend:
Bereitstellen einer Schneidstruktur (21) aus rostfreiem Stahl mit einer im Wesentlichen elliptisch geformten Hauptschneidvorrichtung (22) und einer ersten (23) sowie einer zweiten Schneidvorrichtung (24), die sich jeweils in entgegengesetzte Richtungen auswärts von der Hauptschneidvorrichtung (22) erstrecken, während die Hauptschneidvorrichtung (22) und die erste (23) sowie die zweite Schneidvorrichtung (24) jeweils scharfe Schneidränder (25) zum Schneiden der Frucht aufweisen, **gekennzeichnet durch**:
Bereitstellen einer Griffstruktur (30; 201) mit erstem (31; 202) und zweitem Griff (32; 203), die sich auswärts von der Schneidstruktur (21) entsprechend in entgegengesetzte Richtungen erstrecken,
Koppeln der Griffstruktur (30; 201) an die Schneidstruktur (21) lediglich an Orten entlang einer Hauptachse der elliptischen Form,
Anordnen der Schneidstruktur (21) direkt benachbart zu der Frucht und
Bewirken einer Kraft, die auf die Griffe (31, 32; 202, 203) in Richtung der Frucht angewandt wird, so dass die Kraft auf die Schneidstruktur (21) lediglich an Punkten entlang der Hauptachse übertragen wird, wodurch bewirkt wird, dass die scharfen Schneideränder (25) die Frucht durchdringen, um die Frucht von dem Kern zu entfernen, während gleichzeitig die Frucht im Wesentlichen in Hälften geschnitten wird.

6. Das Verfahren gemäß Anspruch 5, während eine erste Achse sich entlang der Hauptachse der elliptisch geformten Hauptschneidvorrichtung (22) erstreckt.

7. Das Verfahren gemäß Anspruch 5, während sich die Griffe (31, 32) entlang einer zweiten Achse erstrecken, die im Wesentlichen rechtwinklig zu der Hauptachse angeordnet ist.

8. Das Verfahren gemäß Anspruch 7, während das Koppeln das Koppeln der Griffe (31, 32) an die Schneidstruktur (21) durch einen ringförmigen Körper (30) umfasst.

9. Das Verfahren gemäß Anspruch 6, während die Griffe (202, 203) sich entlang der ersten Achse erstrecken.

## Revendications

1. Dispositif (200) pour enlever une graine d'un fruit de type mangue comprenant :
une structure de découpe en acier inoxydable (21) présentant un couteau central (22) de forme essentiellement elliptique et des premier (23) et second couteaux (24) s'étendant vers l'extérieur depuis le couteau central (22) essentiellement le long d'un grand axe de la forme elliptique, le couteau central (22) et les premier (23) et second couteaux (24) présentant chacun un bord aiguisé (25) pour découper le fruit ; **caractérisé par**
des première (202) et seconde poignées (203) raccordées respectivement directement à des extrémités distales des premier (23) et second couteaux (24) ;
dans lequel, quand le fruit est positionné essentiellement de manière centrale par rapport au couteau central (22) et adjacent aux bords aiguisés (25) et une force dirigée vers le fruit est appliquée sur les première (202) et seconde poignées (203), les bords aiguisés (25) coupent à travers le fruit et le couteau central (22) dépouille essentiellement le fruit de la graine et les premier (23) et second couteaux (24) découpent le fruit généralement en moitié.

2. Dispositif selon la revendication 1, dans lequel la forme elliptique présente un rapport longueur-largeur situé entre environ 1,6 et environ 3,8.

3. Dispositif selon la revendication 1, dans lequel la forme elliptique présente une longueur d'environ 50 mm à environ 75 mm, le long d'un grand axe de celle-ci, et une largeur d'environ 20 mm à environ 30 mm, le long d'un petit axe de celle-ci.

4. Dispositif selon la revendication 1, dans lequel les première (202) et seconde poignées (203) sont formées en un matériau élastomérique.

5. Procédé pour enlever une graine d'un fruit de type mangue comprenant les étapes consistant à :
fournir une structure de découpe en acier inoxydable (21) présentant un couteau central (22) de forme essentiellement elliptique et des premier (23) et second couteaux (24) s'étendant respectivement dans des directions opposées vers l'extérieur depuis le couteau central (22), le couteau central (22) et les premier (23) et second couteaux (24) présentant respectivement des bords coupants aiguisés (25) pour découper le fruit ; **caractérisé par**
fournir une structure de poignée (30 ; 201) présentant des première (31 ; 202) et seconde poignées (32 ; 203) s'étendant vers l'extérieur depuis la structure de découpe (21) respectivement dans des directions opposées ;
raccorder la structure de poignée (30 ; 201) à la structure de découpe (21) seulement à des emplacements le long d'un grand axe de la forme elliptique ;
positionner la structure de découpe (21) de manière immédiatement adjacente au fruit ; et
faire en sorte qu'une force soit appliquée sur les poignées (31, 32 ; 202, 203) vers le fruit de sorte que la force soit transmise à la structure de découpe (21) seulement à des points le long du grand axe, faisant ainsi en sorte que les bords coupants aiguisés (25) pénètrent le fruit pour retirer le fruit de la graine tout en coupant simultanément le fruit généralement en moitié.

6. Procédé selon la revendication 5, dans lequel un premier axe s'étend le long du grand axe du couteau central (22) de forme elliptique.

7. Procédé selon la revendication 5, dans lequel les poignées (31, 32) s'étendent le long d'un second axe disposé essentiellement perpendiculairement au grand axe.

8. Procédé selon la revendication 7, dans lequel l'étape consistant à raccorder comprend raccorder les poignées (31, 32) à la structure de découpe (21) par un corps circulaire (30).

9. Procédé selon la revendication 6, dans lequel les poignées (202, 203) s'étendent le long du premier axe.
